# DEMANDE DE BREVET EUROPEEN

(11) **EP 1 205 310 A1**
(43) Date de publication de la demande: **15.05.2002**
(21) Numéro de dépôt: 01402889.8
(22) Date de dépôt: 09.11.2001
(51) Int. Cl.: B41M 1/30, B41J 2/195, B41J 3/38, B41J 11/00

(54) **Procédé de marquage en relief d'un objet support en matière plastique et dispositif mettant en oeuvre le procédé**

(30) Priorité: 10.11.2000 FR 0014610
(71) Demandeur: Gilles Leroux S.A., 45400 Semoy (FR)
(72) Inventeur: Peytour, Norbert, 45600 Montbrisson (FR)
(74) Mandataire: Debay, Yves

(57) **Abrégé**

La présente invention concerne un procédé de marquage en relief d'un objet support en matière plastique caractérisé en ce qu'il comporte :
- une étape de dépôt en temps réel et en une seule opération d'un matériau plastique à viscosité ajustable, uniquement aux emplacements devant comporter le marquage en relief et à une température suffisante pour assurer la liaison avec le matériau constituant l'objet support,
- une étape de refroidissement du matériau déposé.

## Description

La présente invention concerne un procédé de marquage en relief d'un objet support en matière plastique et le dispositif permettant la mise en oeuvre du procédé.

Il est connu des procédés de marquage en relief utilisables notamment pour marquer en relief les informations concernant le titulaire et le numéro de compte du possesseur d'une carte plastique telle que les cartes de paiement ou cartes téléphoniques ou cartes de sécurité sociale, ou cartes de sécurité, cartes privatives. Les cartes dites plastiques peuvent être des cartes à puces, des cartes magnétiques, des badges, etc....

Dans l'art antérieur, pour effectuer le marquage de ces objets supports, l'homme de métier avait recours à l'embossage qui présentait des inconvénients notamment dans le domaine des cartes plastiques. En effet, l'embossage pour les cartes plastiques incorporant un circuit intégré, ne pouvait pas se faire au verso de la zone incorporant le circuit intégré et/ou encore moins, pour les cartes incorporant une piste magnétique, au verso de la zone incorporant la piste magnétique. Par ailleurs, l'embossage devait faire un compromis entre la hauteur des caractères, l'épaisseur du support plastique, la rigidité et la résistance de ces caractères au passage dans des appareils de prise d'empreintes et provoquait l'affaiblissement de la solidité de l'objet support dans la zone comportant l'embossage et ne permettant pas d'impression détaillée au verso de la surface embossée.

Par ailleurs, il est connu par la demande de brevet européen 258 099, un procédé de marquage à chaud employé dans diverses industries telles que l'imprimerie, le cartonnage, les fabriques d'objets en matière plastique, les ateliers de reliure. Dans ce procédé, une impression traditionnelle est effectuée sur l'objet support, cette impression utilisant une matière pour former l'image à transformer en relief dont la surface doit rester humide. Une opération de transformation en relief de cette impression est ensuite effectuée par le procédé connu de la thermogravure qui consiste à saupoudrer une impression plate dont l'encre est encore humide d'une poudre thermofusible ayant la propriété de fondre sous l'action de la chaleur, opération associée généralement à celle d'un rayonnement infrarouge pour former un film en relief semi-liquide qui se fige en passant sous un jet d'air frais.

Cette technique d'impression prévoit d'enlever par aspiration l'excès de poudre non retenu par l'encre humide et de recycler cet excès de poudre. On comprendra aisément que cette technique d'impression ne permet pas d'effectuer un marquage en relief de hauteur suffisante pour être équivalent au marquage en relief correspondant à une technique d'embossage. En effet, les caractères embossés dans un objet support en matière plastique ont une largeur de l'ordre de 800 microns, une longueur de 3 mm et une épaisseur de l'ordre de 200 microns.

Pour arriver à déposer 200 microns sur l'objet support par cette technique antérieure, il serait probablement nécessaire d'effectuer plusieurs passages car un seul passage ne permettrait pas à l'encre humide de retenir suffisamment de poudre pour atteindre cette épaisseur. D'autre part, l'opération d'impression nécessite deux étapes, premièrement, le transfert d'une image à l'aide d'une encre humide et deuxièmement l'apport d'une matière thermofusible pour créer le relief.

Il est également connu par la demande de brevet français 2 735 994, une tête d'impression pour transfert thermique de vernis épais. Cette demande de brevet enseigne de déposer un vernis par transfert thermique, notamment pour protéger des cartes plastiques. A cet effet, une tête d'impression thermique du type comportant une extrémité chauffante, applique sur une surface à vernir un ruban enduit d'une couche de vernis transférable sous l'effet de la chaleur. Le ruban est animé d'un mouvement de défilement relativement à la tête d'impression. Dans cette technique, le ruban est en contact avec la carte plastique et il est envisagé de recouvrir toute la surface. Cette technique ne permet pas de recouvrir une seule partie de surface et notamment une partie de surface qui peut être modifiée d'un objet plastique à l'autre en fonction des informations qui doivent être marquées en relief sur la surface.

Un premier but de l'invention est donc de pallier les inconvénients de l'art antérieur.

Ce but est atteint par un procédé de marquage d'un objet support en matière plastique selon la revendication 1.

Des développements supplémentaires de l'invention sont décrits dans les revendications 2 à 8.

Un autre but est de proposer un dispositif permettant la mise en oeuvre du procédé.

Ce but est atteint par le dispositif de marquage en relief selon la revendication 9.

Des développements supplémentaires de l'invention sont décrits dans les revendications 10 et 11.

Les autres avantages et caractéristiques de la présente invention apparaîtront plus clairement à la lecture de la description ci-après faite en référence aux dessins annexés dans lesquels :
- la figure 1 représente une vue en perspective du dispositif permettant la mise en oeuvre de l'invention ;
- la figure 2 représente une vue en coupe selon la direction AA de l'objet support pourvu d'un marquage en relief.

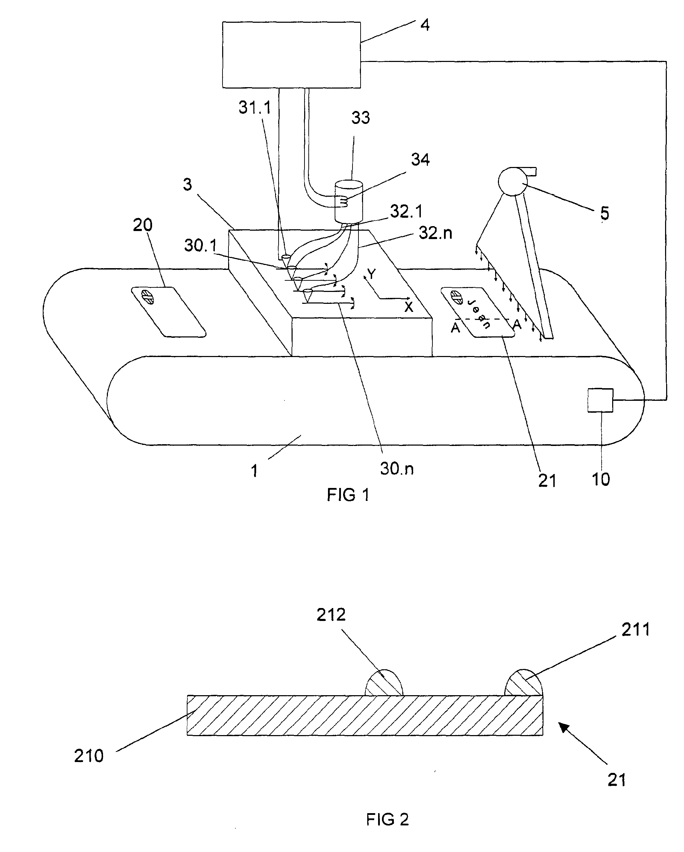

L'invention va maintenant être décrite en liaison avec les figures 1 et 2.

Le dispositif permettant d'effectuer un marquage en relief est constitué d'un moyen de transport (1) permettant de transporter des objets supports (20) en matière plastique non pourvus d'un marquage relief vers une station (3) de marquage (1) en relief. L'objet support (21) sortant de la station de marquage en relief est pourvu, par exemple, de l'information JEAN constituant, par exemple, le prénom de l'utilisateur de l'objet support. L'exemple est donné uniquement à titre illustratif et l'information marquée en relief peut être de tout type, concerner l'utilisateur ou l'application de l'objet support ou toute autre information nécessaire ou utile pour l'utilisation de l'objet support. Ce marquage en relief peut également être constitué non seulement d'informations alphanumériques en toute langue ou idéogrammes mais également du code spécifique tel que, par exemple, code à barres ou tout autre type de code utilisé dans l'industrie.

La station de marquage en relief est constituée par une pluralité de buses (30.1 à 30.n) alimentées par les canalisations respectives (32.1, 32.n) en matériau plastique fluidifié provenant d'un réservoir (33) comportant un moyen de chauffage (34) permettant le contrôle de la fluidité du matériau. Le moyen de chauffage (34) est relié à un ensemble de contrôle (4), lui-même relié à une liaison au moyen (10) d'actionnement du dispositif de transfert (1) avec une vitesse déterminée. Chacune des buses (30.1 à 30.n) est par exemple constituée d'un tube actionné d'un mouvement vibratoire par un système piézoélectrique (31) fournissant au tube une vibration selon une direction y transversale à la direction x de déplacement des objets supports (20). Chacun des éléments piézoélectriques (31.1 à 31.n) permet également, par la déformation de la cavité dans laquelle arrive le matériau plastique fluidifié, de propulser le matériau plastique vers l'extrémité du tube afin d'assurer son dépôt ou sa projection sur l'objet support. Les caractéristiques mécaniques et oscillatoires de l'ensemble sont bien déterminées et contrôlées pour chacune des têtes émettrices par le moyen de contrôle relié à chacune des têtes par une liaison. La fréquence des oscillations et la vitesse de déplacement des objets supports sont contrôlées par l'ensemble de contrôle (4) pour permettre de déposer des gouttes de matière en plastique fondu aux emplacements souhaités sur l'objet support, de façon à ce qu'une pluralité de gouttes déposées successivement au cours du déplacement de la carte de l'objet support devant chacune des têtes et également du déplacement de la tête selon une direction transversale, permet la réalisation de caractères alphanumériques ou d'idéogrammes ou de codes à barres ou de codes spécifiques. La matière plastique déposée est à une température suffisante pour permettre une légère fusion de la surface de l'objet support et une solidarisation de la matière déposée avec la matière constituant le support. Au sortir de la station de marquage en relief, chacun des objets supports passe devant un dispositif de refroidissement (5) pour assurer une solidification rapide afin d'éviter une déformation du relief ainsi obtenu. Comme on peut le voir sur la figure 2, les objets supports ainsi obtenus comportent un marquage en relief (211, 212), le bossage (211) constituant la partie haute de la lettre A et le bossage (212) de la partie inférieure de la lettre A selon la coupe.

Une des techniques utilisables pour les buses émettrices de matière plastique fluidifiée peut être celle divulguée dans la demande de brevet PCT WO 99/46126. Toute autre technique, notamment à jet d'encre permettant le dépôt d'une quantité de matière fluide sur un emplacement déterminé d'un objet support de façon sélective et instantanée, peut également être utilisée. Le couple viscosité-température de dépôt sera un paramètre variable contrôlé par le système de contrôle (4) en fonction de la famille chimique de l'objet support. La nature du matériau à viscosité ajustable déposé sur l'objet support sera également variable selon la famille chimique de l'objet support. Le matériau à viscosité ajustable peut être une encre à séchage par rayonnement UV ou par apport de rayons infrarouges. Dans ce cas, la station (5) de diffusion d'un courant d'air frais est remplacée par un équipement de séchage par rayonnement UV ou par rayonnement infrarouge. Le matériau à viscosité peut également être une résine à séchage par rayonnement UV ou par rayonnement infrarouge. Ce matériau peut également être de la même famille chimique que la carte et du type PVC, PET (polyethylène téraphtalate), PETG (polyethylène téraphtalate glycol), PETF (polyethylène théraphtalate film), APET (amorphe polyethylène téraphtalate), ABS, PE (polyethylène), PS (polystryrène), PP (polypropylène). Dans une variante de réalisation, le réservoir (33) et les moyens de chauffage (34) peuvent être remplacés par une extrudeuse embarquée qui permet d'amener à l'état pâteux ou liquide le matériau à déposer. Cette solution sera choisie notamment dans le cas de l'utilisation de matériau de la même famille chimique que l'objet support. La température de dépôt sur l'objet support sera légèrement supérieure au point vicat du matériau constituant l'objet support, afin d'obtenir une cohésion chimique entre les caractères formant le relief et la carte. Au lieu d'utiliser la technique des aiguilles de diamètre adapté soumises à des vibrations contrôlées électroniquement, on peut envisager également de déposer la matière en relief par un système de valve de dosage qui consiste à envoyer les matériaux à viscosité ajustable dans une chambre de fluide et à combiner la viscosité, la température, la pression, le débit et la dépression obtenus dans cette chambre de fluide pour déposer précisément ces matériaux à viscosité ajustable sur la surface. Le système de contrôle de la tête d'écriture comporte un ordinateur transmettant les informations numériques à inscrire en relief sur l'objet support. Ces informations numériques sont ensuite transformées en signaux électroniques combinés aux phénomènes piézoélectriques pour permettre un contrôle précis du dimensionnement et du dépôt des gouttes. Cette technique présente l'avantage de ne pas déformer le verso de la carte, de ne pas appliquer de contrainte mécanique à la carte résultant de la pression. La technique permet un choix illimité de fontes de caractères et de couleurs des caractères. Une coloration dans la masse des caractères permet de garantir un longévité accrue de la couleur. Chaque ligne de caractères peut avoir une couleur différente, il suffit pour cela de prévoir pour chaque buse d'alimentation spécifique un matériau de couleur différente. De même dans l'exemple donné, les buses écrivent en colonne mais il est évident que l'on peut tout aussi bien décider d'affecter chacune des buses à une ligne d'impression et orienter les objets supports différemment. Cette technique permet la formation de caractères en relief sur tout type d'objet support, notamment sur les cartes laminées ou non, injectées. De même, elle permet la réalisation de caractères en relief sur les cartes dites sans contact. En effet, dans le domaine des cartes à puces ou encore à microprocesseur ou microcontrôleur, il est nécessaire d'établir une liaison entre la carte et l'appareil utilisateur de la carte. En général, cette liaison était assurée jusqu'à présent par une plage de contact constituant un bornier, mais les nouvelles technologies permettent d'envisager la fabrication des cartes dites sans contact communiquant avec un terminal aux moyens soit de radiofréquences, soit de signaux magnétiques ou électrostatiques. Dans de telles cartes, il est difficile de réaliser un embossage car cela peut détruire les antennes ou les boucles magnétiques assurant les transmissions. On réalise que cette technologie de marquage en relief permet un marquage non destructif avantageux pour de telles cartes.

Ainsi, le procédé de marquage en relief d'un objet support en matière plastique comporte :
- une étape de dépôt en temps réel et en une seule opération d'un matériau plastique à viscosité ajustable, uniquement aux emplacements devant comporter le marquage en relief et à une température suffisante pour assurer la liaison physico-chimique avec le matériau constituant l'objet support,
- une étape de refroidissement du matériau déposé.

Selon une autre particularité, l'objet support est une carte magnétique.

Selon une autre particularité, l'objet support est une carte à puces.

Selon une autre particularité, l'objet support est un badge.

Selon une autre particularité, le procédé comporte une étape de commande d'une pluralité (30.1 à 30.n) d'éléments vibrants en forme de tubes alimentés en matériau plastique fluidifié par au moins un réservoir (33), la vibration des tubes étant synchronisée et commandée en fréquences pour produire le dépôt de gouttes de matériau plastique fluidifié aux emplacements nécessaires pour qu'une pluralité de gouttes déposées forme un caractère alphanumérique ou logotype ou surépaisseur ou toutes autres formes de bosses.

Selon une autre particularité, le marquage en relief peut être constitué d'un code à barres.

Selon une autre particularité, le marquage en relief peut être constitué d'autres codes véhiculant une information concernant l'objet support ou l'utilisateur de l'objet support.

Selon une autre particularité, le contrôle du dépôt des gouttes est effectué en fonction de la vitesse de défilement des objets supports devant les extrémités des têtes d'impression (30.1 à 30.n).

Le dispositif selon l'invention comporte des moyens (1) de déplacement d'un objet support (21) en matière plastique devant une station d'impression (3) équipée d'une pluralité de buses (30.1 à 30.n) émettrices de gouttes d'un matériau plastique à viscosité ajustable, lesdites gouttes formant sur l'objet support des points en relief, les buses émettrices comportant des moyens (4) de contrôler le positionnement des gouttes selon une direction transversale à la direction de déplacement des objets supports ainsi que des moyens de contrôle dans le temps de l'émission de chacune des gouttes en fonction d'une part de la vitesse de déplacement des objets supports et d'autre part des informations constituant le marquage.

Selon une autre particularité, le dispositif comporte une station de refroidissement (5) de la matière plastique fluidifié.

Selon une autre particularité, la station de dépôt comporte une unité de contrôle (4) reliée d'une part aux moyens de commande (10) de la vitesse de transfert des objets supports (20) devant la station de marquage (3) et reliée d'autre part à chacune des buses (30.1 à 30.n) d'émission du matériau plastique fluidifié.

L'unité de contrôle comporte également des liaisons avec chacun des moyens de chauffage du réservoir de matière plastique.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de marquage en relief d'un objet support en matière plastique **caractérisé en ce qu'**il comporte :
- une étape de dépôt en temps réel et en une seule opération d'un matériau plastique à viscosité ajustable, uniquement aux emplacements devant comporter le marquage en relief et à une température suffisante pour assurer la liaison physico-chimique avec le matériau constituant l'objet support,
- une étape de refroidissement du matériau déposé.

2. Procédé de marquage selon la revendication 1, **caractérisé en ce que** l'objet support est une carte magnétique.

3. Procédé de marquage selon la revendication 1, **caractérisé en ce que** l'objet support est une carte à puces.

4. Procédé de marquage selon la revendication 1, **caractérisé en ce que** l'objet support est un badge.

5. Procédé de marquage selon la revendication 1 à 4, **caractérisé en ce que** le procédé comporte une étape de commande d'une pluralité (30.1 à 30.n) d'éléments vibrants en forme de tubes alimentés en matériau plastique fluidifié par au moins un réservoir (33), la vibration des tubes étant synchronisée et commandée en fréquences pour produire le dépôt de gouttes de matériau plastique fluidifié aux emplacements nécessaires pour qu'une pluralité de gouttes déposées forme un caractère alphanumérique ou logotype ou surépaisseur ou toutes autres formes de bosses.

6. Procédé de marquage selon la revendication 1 à 5, **caractérisé en ce que** le marquage en relief peut être constitué d'un code à barres.

7. Procédé de marquage selon la revendication 1 à 5, **caractérisé en ce que** le marquage en relief peut être constitué d'autres codes véhiculant une information concernant l'objet support ou l'utilisateur de l'objet support.

8. Procédé de marquage selon la revendication 1 à 7, **caractérisé en ce que** le contrôle du dépôt des gouttes est effectué en fonction de la vitesse de défilement des objets supports devant les extrémités des têtes d'impression (30.1 à 30.n).

9. Dispositif de marquage en relief **caractérisé en ce qu'**il comporte des moyens (1) de déplacement d'un objet support (21) en matière plastique devant une station d'impression (3) équipée d'une pluralité de buses (30.1 à 30.n) émettrices de gouttes d'un matériau plastique à viscosité ajustable, lesdites gouttes formant sur l'objet support des points en relief, les buses émettrices comportant des moyens (4) de contrôler le positionnement des gouttes selon une direction transversale à la direction de déplacement des objets supports ainsi que des moyens de contrôle dans le temps de l'émission de chacune des gouttes en fonction d'une part de la vitesse de déplacement des objets supports et d'autre part des informations constituant le marquage.

10. Dispositif selon la revendication 9, **caractérisé en ce qu'**il comporte une station de refroidissement (5) de la matière plastique fluidifié.

11. Dispositif selon la revendication 9 ou 10, **caractérisé en ce que** la station de dépôt comporte une unité de contrôle (4) reliée d'une part aux moyens de commande (10) de la vitesse de transfert des objets supports (20) devant la station de marquage (3) et reliée d'autre part à chacune des buses (30.1 à 30.n) d'émission du matériau plastique fluidifié.
